(19) Europäisches Patentamt
European Patent Office
Office européen des brevets

(11) **EP 3 958 014 B1**

(12) **FASCICULE DE BREVET EUROPEEN**

(45) Date de publication et mention de la délivrance du brevet:
**08.11.2023 Bulletin 2023/45**

(21) Numéro de dépôt: **21187529.9**

(22) Date de dépôt: **23.07.2021**

(51) Classification Internationale des Brevets (IPC):
**G01S 13/34** *(2006.01)* **G01S 13/931** *(2020.01)*

(52) Classification Coopérative des Brevets (CPC):
**G01S 13/347; G01S 13/343; G01S 13/931**

(54) **GÉNÉRATEUR DE SIGNAL RADAR MODULÉ EN FRÉQUENCE**

GENERATOR FÜR FREQUENZMODULIERTE RADARSIGNALE

FREQUENCY-MODULATED RADAR SIGNAL GENERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.08.2020 FR 2008588**

(43) Date de publication de la demande:
**23.02.2022 Bulletin 2022/08**

(73) Titulaire: **Commissariat à l'énergie atomique et aux énergies alternatives 75015 Paris (FR)**

(72) Inventeurs:
  • **ZARUDNIEV, Mykhailo**
    **38054 GRENOBLE CEDEX 09 (FR)**
  • **ANTIDE, Etienne**
    **38054 GRENOBLE CEDEX 09 (FR)**
  • **DEHOS, Cédric**
    **38054 GRENOBLE CEDEX 09 (FR)**
  • **GONZALEZ JIMENEZ, José-Luis**
    **38054 GRENOBLE CEDEX 09 (FR)**
  • **JANY, Clément**
    **38054 GRENOBLE CEDEX 09 (FR)**
  • **SILIGARIS, Alexandre**
    **38054 GRENOBLE CEDEX 09 (FR)**

(74) Mandataire: **Brevalex
    Tour Trinity
    1 B Place de la Défense
    92400 Courbevoie (FR)**

(56) Documents cités:
  • **CHRISTIAN CARLOWITZ ET AL: "A low power Pulse Frequency Modulated UWB radar transmitter concept based on switched injection locked harmonic sampling", MICROWAVE CONFERENCE (GEMIC), 2012 THE 7TH GERMAN, IEEE, 12 mars 2012 (2012-03-12), pages 1-4, XP032169170, ISBN: 978-1-4577-2096-3**
  • **LIU YAO-HONG ET AL: "An Ultralow Power Burst-Chirp UWB Radar Transceiver for Indoor Vital Signs and Occupancy Sensing in 40-nm CMOS", IEEE SOLID-STATE CIRCUITS LETTERS, IEEE, vol. 2, no. 11, 1 novembre 2019 (2019-11-01), pages 256-259, XP011758715, DOI: 10.1109/LSSC.2019.2951423**

**Description**

**DOMAINE TECHNIQUE**

L'invention concerne le domaine des architectures de génération de signaux, ou d'ondes, modulés en fréquence pour les applications radar, notamment courte portée (« Short Range Radar » en anglais, et qui correspond à des détections réalisées pour des distances par exemple inférieures à 100 m), utilisées notamment dans le domaine automobile (par exemple pour les radars de régulation de distance, également appelés radars ACC pour « Adaptive Cruise Control » en anglais), dans celui de la surveillance et de la défense, dans l'aéronautique, pour la reconnaissance de geste ou la réalisation d'interface homme-machine, ou encore le domaine de la mesure et de la surveillance de signes vitaux (rythme cardiaque et respiration), etc.

**ÉTAT DE LA TECHNIQUE ANTÉRIEURE**

Les radars de type FMCW (« Frequency Modulated Continous Waveform » en anglais, ou à ondes entretenues modulées en fréquence) sont bien adaptés à la réalisation de radars de courte portée en raison des ondes envoyées par ce type de radar qui sont sinusoïdales, ce qui permet d'obtenir des signaux de bonne puissance.

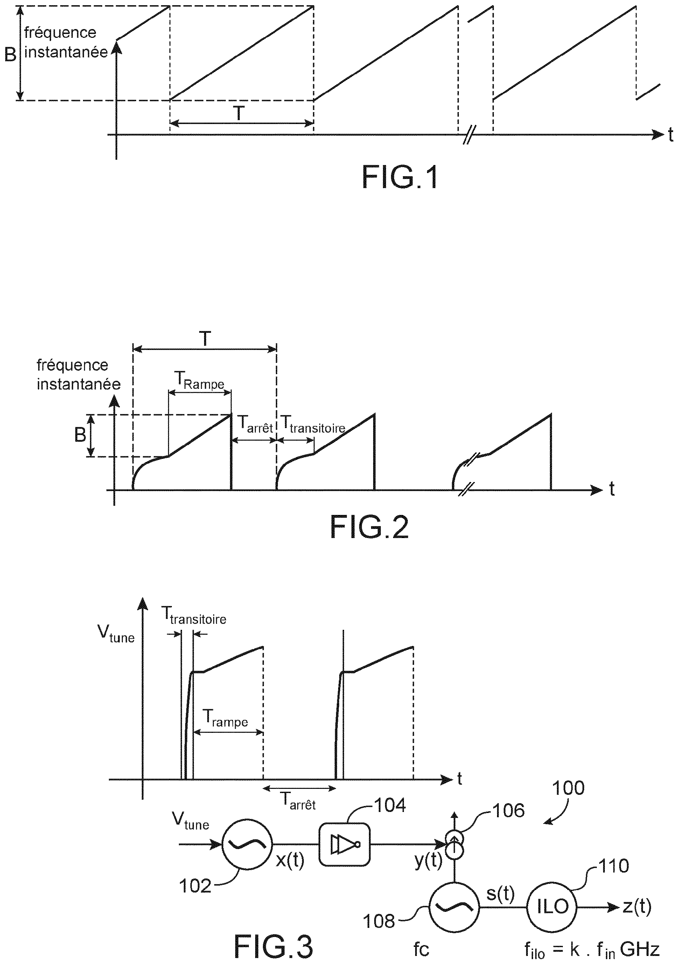

La figure 1 représente la variation temporelle de la fréquence instantanée d'un signal envoyé par un radar de type FMCW. Un tel signal est par exemple généré à partir d'un oscillateur local, et correspond à un signal sinusoïdal dont la fréquence instantanée varie linéairement, sur chaque période T, dans une bande de fréquences B. Cette variation linéaire de la fréquence instantanée du signal forme une rampe répétée périodiquement à la période T et dont la pente est définie par un paramètre $\alpha$ représentatif de la rapidité de l'excursion en fréquence du signal sur un temps fixe. Ce paramètre $\alpha$ correspond à la tangente de l'angle formé par la rampe par rapport à l'axe du temps, et s'exprime en GHz/$\mu$s. Plus la valeur du paramètre $\alpha$ est grande, plus la variation de la fréquence instantanée du signal sur la bande de fréquences B est obtenue rapidement (c'est-à-dire plus T sera petit) ou, pour une durée T fixe, plus la bande de fréquences B est grande.

Un des éléments clés de tout dispositif d'émission de signaux radar est le générateur de signaux utilisé pour l'émission des ondes radar. Ce générateur doit être dimensionné de façon à répondre au besoin de résolution spatiale en distance $\Delta R$ très fine du radar lui permettant de distinguer différentes cibles proches les unes des autres. Cette résolution $\Delta R$ est typiquement de quelques centimètres, ce qui peut être obtenu en garantissant une bande de fréquences B élevée, de l'ordre d'au moins 1 GHz. Au premier ordre, la résolution spatiale en distance $\Delta R$ peut s'exprimer par l'équation :

$$\Delta R \sim \frac{c}{2B}$$

Ainsi, plus la bande de fréquences B sera grande, meilleur sera le pouvoir de séparation du radar entre deux objets détectés par le radar. A titre d'exemple, une bande de fréquences B = 1 GHz permet d'obtenir une résolution $\Delta R$ de l'ordre de 0,15 m, et une bande de fréquences B = 2 GHz permet d'obtenir une résolution $\Delta R$ de l'ordre de 0,075 m.

La bande de fréquences B est balayée par le signal radar pendant la période T dont la valeur est définie par l'application radar visée. Réduire la durée nécessaire au signal radar pour faire varier sa fréquence instantanée dans toute la bande de fréquences B tout en ne réduisant pas la bande de fréquences B permet, sur une même période T, d'intégrer un plus grand nombre de signaux (ce qui correspond à avoir plusieurs rampes dans une seule période T), par exemple pour réaliser une opération d'intégration cohérente à la réception.

Afin de réduire la consommation électrique du générateur de signaux radar, il est possible de générer un signal radar ayant une amplitude non nulle sur une partie seulement de la période T, pendant laquelle la fréquence instantanée du signal radar varie sur toute la bande de fréquences B, et ayant une valeur nulle sur le reste de la période T, ce qui permet d'éteindre le générateur pendant ce reste de la période T. Le signal radar est ainsi généré avec un rapport cyclique D (« duty cycle » en anglais) inférieur à 1 (ou inférieur à 100 %). Le document de Y. Liu et al., "9.3 A 680 $\mu$W Burst-Chirp UWB Radar Transceiver for Vital Signs and Occupancy Sensing up to 15m Distance," 2019 IEEE International Solid- State Circuits Conférence - (ISSCC), San Francisco, CA, USA, 2019, pp. 166-168, décrit un tel exemple de réalisation de générateur de signaux radar.

La figure 2 représente la variation temporelle de la fréquence instantanée d'un signal radar de type FMCW ayant un rapport cyclique D inférieur à 1.

Pendant chaque période T, et du fait que le générateur est arrêté pendant une partie de chaque période T, le signal radar généré passe par une phase d'établissement, qui correspond à la mise en route du générateur, pendant laquelle la fréquence instantanée du signal radar ne change pas linéairement dans le temps. Cette phase d'établissement a une durée appelée $T_{transitoire}$. Pendant cette phase d'établissement, le signal radar n'est pas exploitable et le radar ne réalise pas de mesure. La durée pendant laquelle la fréquence instantanée du signal radar varie linéairement sur la bande de fréquences B est appelée $T_{rampe}$ et correspond à la durée de la mesure réalisée par le radar. Enfin, la durée pendant laquelle le signal a une amplitude nulle, qui correspond à la phase pendant laquelle l'économie d'énergie est réalisée grâce à la mise à l'arrêt du générateur qui ne consomme pratiquement plus d'énergie, hormis du courant de fuite, est appelée $T_{arrêt}$.

Afin de réduire au maximum la consommation électrique du générateur d'ondes radar, la durée $T_{arrêt}$ doit être la plus grande possible, et donc les durées $T_{rampe}$ et $T_{transitoire}$ doivent être les plus courtes possibles.

La valeur du rapport cyclique D est définie par l'équation :

$$D = \frac{T_{rampe}}{T_{rampe} + T_{transitoire} + T_{arrêt}}$$

Les solutions actuelles permettent d'obtenir un rapport cyclique D d'environ 3 %, avec une durée $T_{transitoire}$ de l'ordre de 10 $\mu$s, une durée $T_{rampe}$ comprise entre 10 $\mu$s et 40 $\mu$s, une durée $T_{arrêt}$ de l'ordre de 1,2 ms et une valeur du paramètre $\alpha$ compris entre 0,05 GHz/$\mu$s et 0,12 GHz/$\mu$s, pour une bande de fréquences B de 750 MHz centrée sur une fréquence de 8 GHz.

Le document A. Banerjee et al., "Millimeter-Wave Transceivers for Wireless Communication, Radar, and Sensing : (Invited Paper)," 2019 IEEE Custom Integrated Circuits Conférence (CICC), Austin, TX, USA, 2019, pp. 1-11, récapitule les performances obtenues avec différents types de générateurs de signaux radar. Les valeurs de $\alpha$ pouvant être obtenues, pour une bande de fréquences B supérieure à 1 GHz, sont comprises entre 0,025 GHz/$\mu$s et 0,1667 GHz/$\mu$s.

Le document CHRISTIAN CARLOWITZ et al., « A low power Pulse Frequency Modulated UWB radar transmitter concept based on switched injection locked harmonie sampling", Microwave Conférence (GEMIC), 2012 the 7th German, IEEE, 12 mars 2012, pages 1-4, décrit la génération d'un signal faisant appel à un oscillateur générant un signal périodique dont la fréquence varie linéairement dans la bande de fréquence souhaitée, et dont la sortie est interrompue périodiquement par un signal carré. Le signal radar généré peut dans ce cas être exprimé par la relation $x_{DDS}(t) =$

$$[\cos(2\pi f_{bb} t) \cdot \text{Ш}_T(t)] \star \Pi(t/T)$$

avec $f_{bb}$ la fréquence en bande de base du signal généré par l'oscillateur, $\text{Ш}$ étant un peigne de Dirac, $\Pi(t/T)$ une fonction porte et T la période constante du signal carré interrompant périodiquement la sortie de l'oscillateur. La solution présentée dans ce document forme un multiplieur d'onde FMCW par l'une des harmoniques qui est toutefois fortement atténuée puisque le signal ne présente pas de propriétés de cohérence à la fréquence souhaitée. De ce fait, la multiplication de fréquence utilisant cette solution n'est pas intéressante pour réaliser des taux de multiplication élevés sur la bande passante du signal FMCW.

Le document LIU YAO-HONG et al., « An Ultralow Power Burst-Chirp UWB Radar Transceiver for Indoor Vital Signs and Occupancy Sensing in 40-nm CMOS », IEEE Solid-State Circuits Letters, IEEE, vol. 2, n°11, 1er novembre 2019, pages 256-259, décrit la génération d'un signal radar directement à la fréquence porteuse, ici autour de 8GHz. L'utilisation de cette solution pour générer un signal radar directement dans la bande mmW avec les mêmes propriétés nécessiterait l'utilisation d'un multiplieur de fréquence. Toutefois, l'ajout d'un tel multiplieur engendrerait une distorsion du signal FMCW en raison du facteur de multiplication appliqué.

Minimiser la valeur de $T_{rampe}$ tout en maximisant la valeur de la bande de fréquences B, c'est-à-dire maximiser la valeur du paramètre $\alpha$, permettrait d'obtenir :

- un meilleur rapport signal sur bruit (ou SNR pour « Signal-to-Noise ratio » en anglais) à la réception du signal grâce à l'intégration cohérente de multiple impulsions modulées en fréquence sur une durée donnée, et/ou
- un taux d'utilisation faible du générateur de signaux, c'est-à-dire la possibilité de faire l'acquisition du signal en moins de temps et puis d'arrêter le générateur plus longtemps, ce qui permet de consommer moins d'énergie.

## EXPOSÉ DE L'INVENTION

Un but de la présente invention est de proposer un générateur de signal radar modulé en fréquence permettant d'améliorer le rapport signal sur bruit à la réception de ce signal et/ou dont la consommation électrique soit réduite.

Pour cela, la présente invention propose un générateur de signal radar modulé en fréquence, comprenant au moins :

- un dispositif de génération d'un signal périodique modulé en fréquence sur au moins une partie $T_{rampe}$ d'une période T, correspondant, sur la partie $T_{rampe}$ de la période T, à un signal carré dont la fréquence instantanée varie linéairement sur la totalité d'une première bande de fréquences $B_{in}$ de fréquence centrale $f_{in}$ et dont l'amplitude alterne entre une première valeur et une deuxième valeur différente de la première valeur ;
- un oscillateur comprenant une entrée d'alimentation électrique couplée à des moyens aptes à être commandés par le signal périodique modulé en fréquence et à générer une tension d'alimentation de l'oscillateur non nulle seulement lorsque l'amplitude du signal périodique modulé en fréquence est égale à la première valeur ou seulement lorsque l'amplitude du signal périodique modulé en fréquence est égale à la deuxième valeur, permettant à l'oscillateur de générer un signal sinusoïdal de fréquence $f_c > f_{in}$ et comprise dans une deuxième bande de fréquences $B_{amp} > B_{in}$, la deuxième bande de fréquences $B_{amp}$ correspondant à la variation linéaire de la fréquence du signal radar modulé en fréquence destiné à être généré.

Dans ce générateur, le dispositif de génération du signal périodique modulé en fréquence permet de définir l'enveloppe de modulation du signal radar. Il définit notamment la valeur de la période T et celle de $T_{rampe}$, ainsi que la première bande de fréquences $B_{in}$ sur laquelle la fréquence instantanée du signal périodique modulé en fréquence varie. L'oscillateur et les moyens commandés par le signal périodique modulé en fréquence génèrent ensuite un signal sinusoïdal dans la deuxième bande de fréquences $B_{amp}$ souhaitée pour le signal radar et sur lequel le signal périodique modulé en fréquence est appliqué comme signal d'enveloppe via la commande de l'alimentation électrique de l'oscillateur ou l'interruption commandée de la sortie de l'oscillateur. Ainsi, l'oscillateur délivre en sortie le signal radar modulé en fréquence dont la fréquence varie linéairement sur toute la deuxième bande de fréquences $B_{amp}$ qui est supérieure à $B_{in}$, tout en conservant les propriétés d'enveloppe conférées par le signal périodique modulé en fréquence, notamment les valeurs de la période T et de la durée $T_{rampe}$.

Ainsi, ce générateur permet de générer un signal radar dont la fréquence instantanée varie linéairement sur une large bande de fréquences $B_{amp}$ et pendant une courte durée $T_{rampe}$.

Dans l'invention, du fait que le signal périodique modulé en fréquence qui définit l'enveloppe de modulation du signal radar est généré en amont de l'oscillateur et commande l'alimentation de l'oscillateur, cela permet d'obtenir en sortie de l'oscillateur un signal radar dont la fréquence instantanée varie linéairement sur une large bande de fréquences $B_{amp}$ et pendant une courte durée $T_{rampe}$. Un tel résultat ne pourrait pas être obtenu si par exemple le signal périodique modulé en fréquence était utilisé pour couper périodiquement une sortie d'un oscillateur générant un signal périodique dont la fréquence varie linéairement sur la bande de fréquences radar souhaitée.

De manière simplifiée, le signal radar généré dans l'invention peut s'exprimer par la relation

$$x(t) = [\cos(2\pi f_{bb}t) \cdot \Pi(t/T)] \star \amalg_T(t),$$

avec $f_{bb}$ la fréquence en bande de base du signal généré par l'oscillateur, $\amalg$ étant un peigne de Dirac, $\Pi(t/T)$ une fonction porte et T la période constante du signal périodique commandant l'alimentation de l'oscillateur.

Selon un premier mode de réalisation, le dispositif de génération du signal périodique modulé en fréquence peut comporter :

- un dispositif de génération d'un premier signal périodique de période T correspondant, sur la partie $T_{rampe}$ de la période T, à un signal sinusoïdal dont la fréquence instantanée varie linéairement sur toute la première bande de fréquences $B_{in}$ ;
- un dispositif de conversion du premier signal périodique en le signal périodique modulé en fréquence tel que l'amplitude du signal périodique modulé en fréquence soit égale à la première valeur lorsque la valeur du premier signal périodique est strictement supérieure à 0 et soit égale à la deuxième valeur lorsque la valeur du premier signal périodique est strictement inférieure à 0.

Dans ce premier mode de réalisation, le dispositif de génération du premier signal périodique peut comporter un premier oscillateur commandé en tension.

Ce premier mode de réalisation est bien adapté pour réaliser un générateur de signal radar modulé en fréquence à très faible consommation car grâce au démarrage rapide de l'oscillateur commandé en tension générant le premier signal périodique, la phase d'établissement du générateur est très courte (par exemple inférieure à 10 ns), ce qui permet de maximiser la durée $T_{arrêt}$ pendant laquelle le générateur peut être éteint. Avec ce premier mode de réalisation, il est par exemple possible d'obtenir un signal radar modulé en fréquence dont le rapport cyclique D soit inférieur ou égal à 0,1 %.

Dans ce premier mode de réalisation, le dispositif de conversion du premier signal périodique peut comporter une boucle à verrouillage de fréquence (également appelée FLL ou « Frequency-Locked Loop » en anglais) incluant un oscillateur en anneau.

Selon un deuxième mode de réalisation, le dispositif de génération du signal périodique modulé en fréquence peut comporter au moins un dispositif résonateur dont une sortie est couplée électriquement à une boucle à verrouillage de phase (également appelée PLL ou « Phase-Locked Loop » en anglais), le signal périodique modulé en fréquence étant destiné à être obtenu en sortie d'un deuxième oscillateur commandé en tension de la boucle à verrouillage de phase.

Ce deuxième mode de réalisation est bien adapté pour réaliser un générateur de signal radar modulé en fréquence ayant une très bonne linéarité grâce à l'utilisation de la boucle à verrouillage de phase, ce qui permet de réaliser un générateur de signal radar à haut rapport signal sur bruit. Le générateur selon ce deuxième mode de réalisation est également bien adapté pour fournir, pendant une période T donnée, un signal radar modulé en fréquence dont la fréquence instantanée varie linéairement plusieurs fois, de manière consécutive, sur la bande de fréquences $B_{amp}$.

Le signal périodique modulé en fréquence peut avoir une valeur nulle sur une deuxième partie de la période T différente de la partie $T_{rampe}$. Ainsi, le générateur peut être éteint sur une partie de chaque période T, permettant de réduire la consommation électrique du générateur.

La deuxième valeur du signal périodique modulé en fréquence peut être nulle.

La valeur de la première bande de fréquences $B_{in}$ peut être comprise entre 1% et 2% d'une fréquence $f_{in}$ sur laquelle la première bande de fréquences est centrée.

L'oscillateur peut correspondre à un troisième oscillateur commandé en tension dont la plage d'oscillation libre inclut la fréquence $f_c$ dont la valeur est fonction de celle d'une tension de commande destinée à être appliquée en entrée du troisième oscillateur commandé en tension.

Les moyens aptes à être commandés par le signal périodique modulé en fréquence peuvent comporter au moins un interrupteur couplé à l'entrée d'alimentation électrique de l'oscillateur ou à la sortie de l'oscillateur.

Le générateur de signal radar modulé en fréquence peut comporter en outre au moins un oscillateur verrouillé par injection (également appelé ILO ou « Injection-Locked Oscillator » en anglais) destiné à recevoir en entrée un signal délivré sur la sortie de l'oscillateur et à être verrouillé au moins périodiquement à une fréquence $f_{ILO} = k.f_{in}$, avec k nombre entier supérieur à 1, la valeur de $f_{ILO}$ étant, parmi les différentes valeurs multiples de $f_{in}$, celle qui est la plus proche de la valeur de la fréquence $f_c$. Un tel oscillateur verrouillé par injection permet de réaliser un filtrage du signal délivré sur la sortie de l'oscillateur afin d'éliminer ou réduire les composantes du signal ne se trouvant pas dans la bande de fréquences souhaitée pour le signal radar modulé en fréquence.

Les éléments du générateur peuvent être réalisés sur une puce électronique, par exemple sous la forme d'un circuit intégré.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente la variation temporelle de la fréquence instantanée d'un signal envoyé par un radar de type FMCW ;
- la figure 2 représente la variation temporelle de la fréquence instantanée d'un signal radar de type FMCW ayant un rapport cyclique D inférieur à 1 ;
- la figure 3 représente schématiquement un générateur de signal radar modulé en fréquence selon un premier mode de réalisation ;
- la figure 4 représente schématiquement le premier signal x(t) dans le domaine temporel et dans le domaine fréquentiel, ainsi que l'évolution dans le domaine temporel de la fréquence instantanée de ce premier signal ;
- la figure 5 représente schématiquement le deuxième signal y(t) dans le domaine temporel et dans le domaine fréquentiel, ainsi que l'évolution dans le domaine temporel de la fréquence instantanée de ce deuxième signal y(t) ;
- les figures 6 à 8 représentent les spectres du deuxième signal y(t) lorsque le rapport cyclique du deuxième signal $\alpha_{dc}$ est respectivement tel que $\alpha_{dc}$ = 1/8, $\alpha_{dc}$ = 1/4 et $\alpha_{dc} \approx$ 1 et inférieur à 1 ;
- la figure 9 représente schématiquement le troisième signal s(t) dans le domaine temporel et dans le domaine fréquentiel, ainsi que l'évolution dans le domaine temporel de la fréquence instantanée de ce troisième signal s(t) ;
- la figure 10 représente schématiquement le signal radar modulé en fréquence délivré par le générateur, dans le domaine temporel et dans le domaine fréquentiel, ainsi que l'évolution dans le domaine temporel de la fréquence instantanée de ce signal ;
- la figure 11 représente les variations temporelles de la fréquence instantanée de signaux radar modulés en fréquence de l'art antérieur ainsi que celle d'un signal radar modulé en fréquence délivré en sortie du générateur selon l'invention ;

- la figure 12 représente schématiquement un générateur de signal radar modulé en fréquence selon un deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

Un générateur 100 de signal radar modulé en fréquence selon un premier mode de réalisation est décrit ci-dessous et représenté schématiquement sur la figure 3.

Dans ce premier mode de réalisation, le signal radar modulé en fréquence généré a un rapport cyclique D inférieur à 1.

Le générateur 100 comporte un dispositif 102 de génération d'un premier signal x(t) périodique de période T correspondant, sur la partie $T_{rampe}$ de la période T, à un signal sinusoïdal dont la fréquence instantanée varie linéairement dans une première bande de fréquences basses $B_{in}$ centrée sur une fréquence centrale $f_{in}$. Le premier signal x(t) modulé linéairement en fréquence peut s'exprimer par l'équation suivante :

$$x(t) = \begin{cases} sin\left(2\pi(f_{in}'t + \alpha t^2)\right), pour\ t \in \left[0, T_{rampe}\right] \\ 0, pour\ t \notin \left[0, T_{rampe}\right] \end{cases}$$

La pente de la rampe formée par la variation de la fréquence instantanée du signal x(t) dans le temps est caractérisée par le paramètre $\alpha = B_{in}/(2.T_{rampe})$. La fréquence $f'_{in} = f_{in} - \alpha.T_{rampe}$ correspond à la fréquence instantanée du signal x(t) au début de la rampe. La première bande de fréquences $B_{in}$ correspond à une bande de fréquences dont les valeurs se situent aux alentours de un à quelques pourcents par rapport à la fréquence centrale $f_{in}$, avantageusement entre environ 1 % et 2 % de $f_{in}$. De manière générale, la valeur de $B_{in}$ est avantageusement comprise entre environ quelques dizaines de MHz, ou par exemple entre 10 MHz et 90 MHz, et la valeur de $f_{in}$ est avantageusement comprise entre environ quelques centaines de MHz et quelques GHz, par exemple entre 100 MHz et 10 GHz. La valeur de $T_{rampe}$ est par exemple inférieure à 250 ns. En outre, dans ce premier mode de réalisation, la valeur de $T_{transitoire}$ est inférieure à 10 ns et celle de $T_{arrêt}$ est supérieure ou égale à 1 ms.

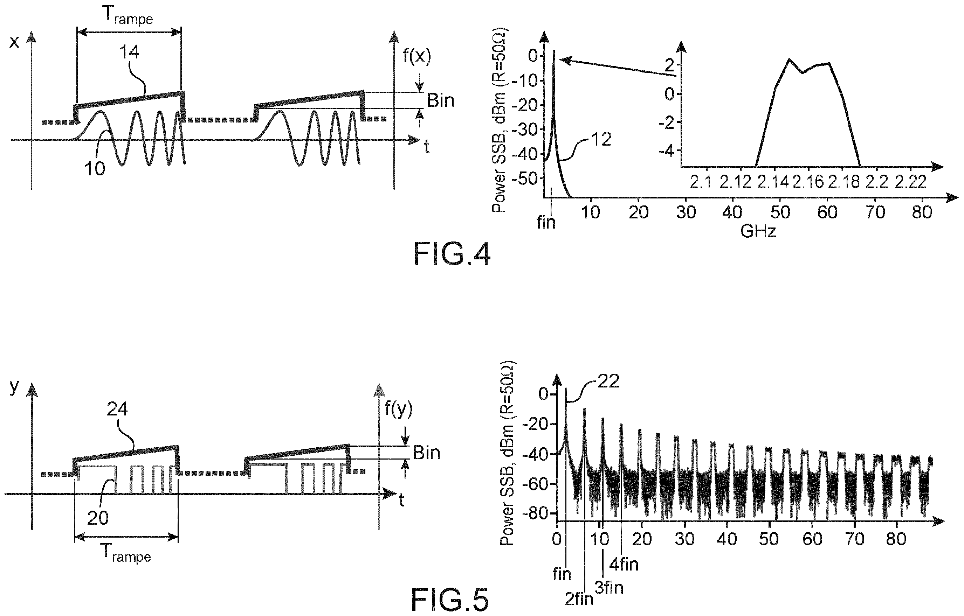

La figure 4 représente schématiquement le premier signal x(t) dans le domaine temporel (courbe désignée par la référence 10) et dans le domaine fréquentiel (spectre désigné par la référence 12), ainsi que l'évolution dans le domaine temporel de la fréquence instantanée de ce premier signal x(t) (courbe désignée par la référence 14, et qui inclut la rampe formée par la variation de la fréquence instantanée de ce premier signal durant $T_{rampe}$). Sur la figure 4, les durées $T_{arrêt}$ et $T_{transitoire}$ ne sont pas représentées.

Selon un exemple de réalisation particulier, le spectre du premier signal x(t) est centré sur la fréquence centrale $f_{in}$ = 2,16 GHz. La première bande de fréquences $B_{in}$ de ce premier signal x(t) est égale à 43,2 MHz, c'est-à-dire $0,02.f_{in}$.

Dans ce premier mode de réalisation, le dispositif 102 correspond par exemple à un oscillateur commandé par une tension de commande (nommée « $V_{tune}$ » sur la figure 3). La variation de la fréquence instantanée du premier signal x(t) est dans ce cas obtenue en faisant varier l'amplitude de la tension de commande appliquée en entrée de cet oscillateur commandé en tension.

Un exemple de tension de commande $V_{tune}$ est représenté sur la figure 3. La durée nécessaire au signal $V_{tune}$ pour atteindre le niveau de tension de souhaité correspond à la durée $T_{transitoire}$ pendant laquelle le signal x(t) n'a pas encore atteint la fréquence souhaitée (qui correspond à la fréquence limite basse de la première bande de fréquence $B_{in}$). L'amplitude du signal $V_{tune}$ varie ensuite pendant la durée $T_{rampe}$, ce qui entraîne la variation de la fréquence instantanée du premier signal x(t) sur toute la première bande de fréquences $B_{in}$. La valeur de la tension de commande $V_{tune}$ est ensuite nulle sur toute la durée $T_{arrêt}$. Les valeurs de $T_{transitoire}$, $T_{rampe}$ et $T_{arrêt}$ sont donc des paramètres définis par la forme du signal de commande $V_{tune}$ et se retrouvent dans le premier signal x(t).

Ce premier signal x(t) est ensuite converti en un signal destiné à servir de signal d'enveloppe pour une modulation de fréquence. Pour cela, le dispositif 100 comporte un dispositif 104 de conversion du premier signal périodique x(t) en un deuxième signal périodique et modulé en fréquence, appelé y(t). Le deuxième signal y(t) a une amplitude égale à une première valeur lorsque la valeur du premier signal périodique x(t) est strictement supérieure à 0 et a une deuxième valeur, différente de la première valeur, lorsque la valeur du premier signal périodique x(t) est strictement inférieure à 0. La première valeur peut correspondre à un état haut (par exemple égale à la valeur d'une tension d'alimentation du dispositif 100) symbolisé par exemple par la valeur 1 et la deuxième valeur peut correspondre à un état bas (par exemple égale à la valeur d'un potentiel de référence tel que celui de la masse du dispositif 100) symbolisé par exemple par la valeur 0. Dans ce cas, le signal y(t) peut être tel que :

$$y(t) = \begin{cases} y = 1, \ x > 0 \\ y = 0, \ x < 0 \end{cases}$$

Le signal y(t) correspond à un signal périodique et modulé en fréquence sur la partie $T_{rampe}$ de la période T. Sur la partie $T_{rampe}$, le signal y(t) correspond à un signal carré dont la fréquence instantanée varie linéairement dans la première bande de fréquences $B_{in}$ et dont l'amplitude est égale à la première valeur ou à la deuxième valeur.

Le deuxième signal y(t) est destiné à servir de signal d'allumage et de mise à l'arrêt d'une source de courant 106 alimentant électriquement un oscillateur 108. La source de courant 106 contrôle les phases de démarrage et d'arrêt de l'oscillateur 108.

Les impulsions correspondant aux passages de la deuxième valeur à la première valeur de l'amplitude du deuxième signal y(t) forment, pour la source de courant 106 et l'oscillateur 108, des instants d'allumage $t_{start}(n)$ correspondant à un ensemble discret et dénombrable, pour une durée de rampe finie. Dans le cas général, ces instants sont donnés par la relation :

$$t_{start}(n) = \frac{f_{in}{}'T_{rampe}}{B_{in}}\left(-1 + \sqrt{1 + \frac{B_{in}}{f_{in}{}'T_{rampe}}\,(2n-1)}\right), \quad n \in \mathbb{N}$$

Cette relation correspond à une des solutions de l'équation quadratique ordinaire de la phase du premier signal x(t) :

$$\alpha t^2 + f'_{in}t - m = 0 \text{ avec } m = 2n - 1 \text{ et } n \in \mathbb{N}$$

avec

$$\alpha t^2 + f'_{in}t - m = 0 \text{ avec } m = 2n - 1 \text{ et } n \in \mathbb{N}$$

Ces instants permettent de définir le deuxième signal y(t) tel que :

$$y(t) = \sum_{n}^{nmax} \Pi\left(\frac{t - t_{start}(n) - T(n)/2}{T(n)/2}\right)$$

où $\Pi$ représente la fonction porte, sur l'intervalle $T(n) = (t_{start}(n+1) - t_{start}(n))/2$.

La valeur nmax définit l'indice de la dernière période du deuxième signal y(t) dans la séquence. Cette valeur correspond à la limite :

$$nmax = arg\,max_{n\in\mathbb{N}}\,t_{start}(n), \text{ tel que } t_{start}(n) < T_{rampe}.$$

La figure 5 représente schématiquement le deuxième signal y(t) dans le domaine temporel (courbe désignée par la référence 20) et dans le domaine fréquentiel (spectre désigné par la référence 22), ainsi que l'évolution dans le domaine temporel de la fréquence instantanée de ce deuxième signal y(t) (courbe désignée par la référence 24 et qui inclut la rampe formée par la variation de la fréquence instantanée de ce deuxième signal durant $T_{rampe}$). Sur la figure 5, les durées $T_{arrêt}$ et $T_{transitoire}$ ne sont pas représentées.

Les valeurs de $T_{transistoire}$, $T_{rampe}$ et $T_{arrêt}$ dans le premier signal x(t) sont similaires dans le deuxième signal y(t).

Le diagramme fréquentiel du deuxième signal y(t) montre que le deuxième signal y(t) inclut un signal continu de fréquence fondamentale égale à $f_{in}$ (égale à 2,16 GHz dans l'exemple de réalisation particulier décrit ici), et dont l'excursion en fréquence est de plus en plus grande dans des sous-bandes centrées sur les multiples entiers de la fréquence $f_{in}$. Par exemple, la $27^{ème}$ sous-bande, appelée $B_{in\_27}$ et centrée autour de la fréquence 2,16 GHz x 27 = 58,32 GHz, est 27 fois plus large que la bande $B_{in}$ centrée sur la fréquence $f_{in}$, c'est-à-dire $B_{in\_27}$ = 1,16GHz. Pour la $28^{ème}$ sous-bande $B_{in\_28}$ centrée autour de la fréquence 2,16 GHz x 28 = 60,48 GHz, sa largeur est $B_{in\_28}$ = 1,20 GHz. Ainsi, dans le spectre du deuxième signal y(t), chaque $i^{ème}$ sous-bande $B_{in\_i}$ a une fréquence centrale qui est égale à $i.f_{in}$ et une largeur de bande égale à $B_{in\_i}$ = $i.B_{in}$, avec i nombre entier supérieur ou égal à 1.

Le rapport cyclique, appelé $\alpha_{dc}$, du deuxième signal y(t) est par exemple égal à 0,5. Dans ce cas, le spectre du deuxième signal y(t) correspond à l'équation suivante :

$$\mathcal{F}[y](f) = \sum_{n}^{nmax} \frac{T(n)}{2} sinc\left(\frac{T(n)}{2}f\right) \cdot e^{-j2\pi f\left(t_{start}(n)+\frac{T(n)}{4}\right)}$$

Lorsque la valeur du rapport cyclique $\alpha_{dc}$ est différente de 0,5, le spectre du deuxième signal y(t) correspond à l'équation suivante :

$$\mathcal{F}[y](f) = \sum_{n}^{nmax} \frac{\alpha_{dc}T(n)}{2} sinc\left(\frac{\alpha_{dc}T(n)}{2}f\right) \cdot e^{-j2\pi f\left(t_{start}(n)+\alpha_{dc}\frac{T(n)}{2}\right)}$$

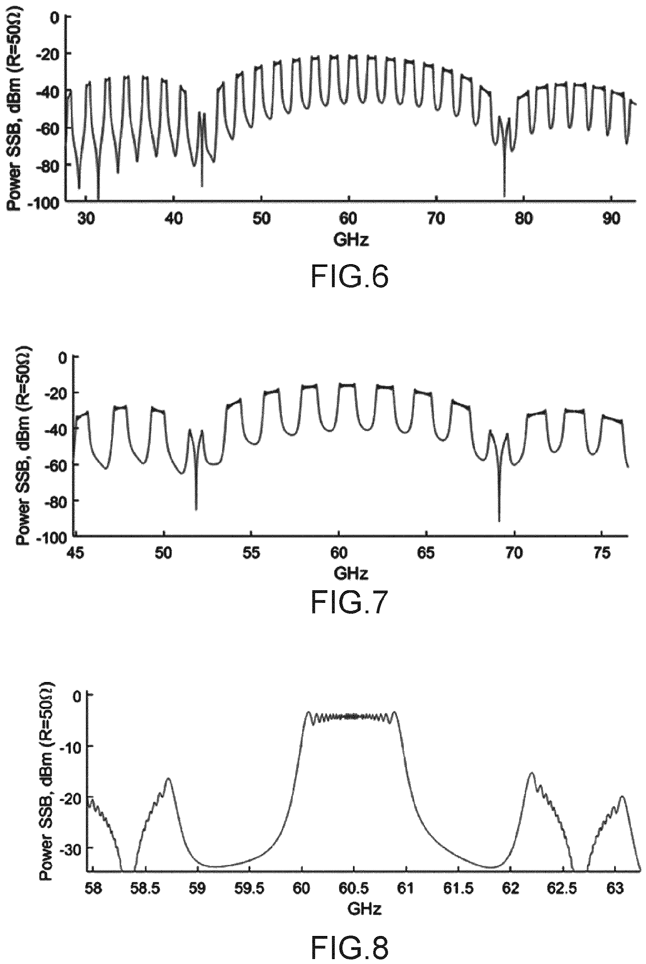

A titre d'exemple, les figures 6 à 8 représentent les spectres du deuxième signal y(t) lorsque $\alpha_{dc}$ est respectivement tel que $\alpha_{dc}$ = 1/8, $\alpha_{dc}$ = 1/4 et $\alpha_{dc} \approx 1$ et inférieur à 1.

Dans le premier mode de réalisation, le dispositif 104 comporte une boucle à verrouillage de fréquence incluant un oscillateur en anneau. Un exemple de réalisation d'une telle boucle à verrouillage de fréquence est donné dans le document C.-H. Yen, M. Nasrollahpour, «Low-Power and High-Frequency Ring Oscillator Design in 65nm CMOS Technology », 2017 IEEE 12th International Conférence on ASIC (ASICON).

En commandant l'alimentation électrique de l'oscillateur 108 par le deuxième signal y(t), cet oscillateur 108 délivre en sortie un signal sinusoïdal de fréquence $f_c$ correspondant à sa fréquence d'oscillation libre et modulé par le deuxième signal y(t). La valeur de la fréquence $f_c$ est fixée par la valeur d'une tension de commande appliquée en entrée de l'oscillateur 108, et est choisie telle qu'elle fasse partie d'une deuxième bande de fréquences $B_{amp}$ appelée bande d'amplification et qui correspond à la variation linéaire de la fréquence du signal radar modulé en fréquence destiné à être généré par le générateur 100. De manière avantageuse, la deuxième bande de fréquences $B_{amp}$ peut être comprise entre 1 GHz et 3 GHz.

Le signal obtenu en sortie de l'oscillateur 108, appelé troisième signal s(t), a la particularité d'avoir sa phase verrouillée sur celle du deuxième signal y(t).

Une telle commande de l'alimentation de l'oscillateur 108 revient à réaliser une amplification autour de la fréquence $f_c$ et un filtrage du deuxième signal y(t) dans la deuxième bande de fréquences $B_{amp}$ autour de la fréquence centrale $f_c$ par le sinus cardinal $sinc\left(\frac{f-f_c}{2f_{in}}\right)$.

Le troisième signal s(t) délivré en sortie de l'oscillateur 108 peut être défini par l'équation suivante :

$$s(t) = \sum_{n}^{nmax} y(t) \cdot sin\left(2\pi f_c(t - t_{start}(n))\right),$$

c'est-à-dire

$$s(t) = \sum_{n}^{nmax} \Pi\left(\frac{t - t_{start}(n) - T(n)/4}{T(n)/2}\right) \cdot sin\left(2\pi f_c(t - t_{start}(n))\right),$$

Le troisième signal s(t) correspond à une somme finie de sinus fenêtrés avec une fonction de type « porte » désignée par la lettre « Π », dont chaque période de porte est définie par T(n) = t$_{start}$(n+1) - t$_{start}$(n).

Dans l'équation ci-dessus, le sinus est un signal réel pouvant être défini tel que :

$$sin\left(2\pi f_c\big(t - t_{start}(n)\big)\right) = \frac{e^{j2\pi f_c(t-t_{start}(n))} - e^{-j2\pi f_c(t-t_{start}(n))}}{2j}$$

En ne considérant que la partie positive, le spectre du troisième signal s(t) peut être défini par l'équation suivante :

$$\mathcal{F}[s](f) = \sum_n^{nmax} \frac{T(n)}{2} sinc\left(\frac{T(n)}{2}(f - f_c)\right) \cdot e^{-j2\pi f(t_{start}(n)+T(n)/4)} \cdot e^{j2\pi f_c T(n)/4}$$

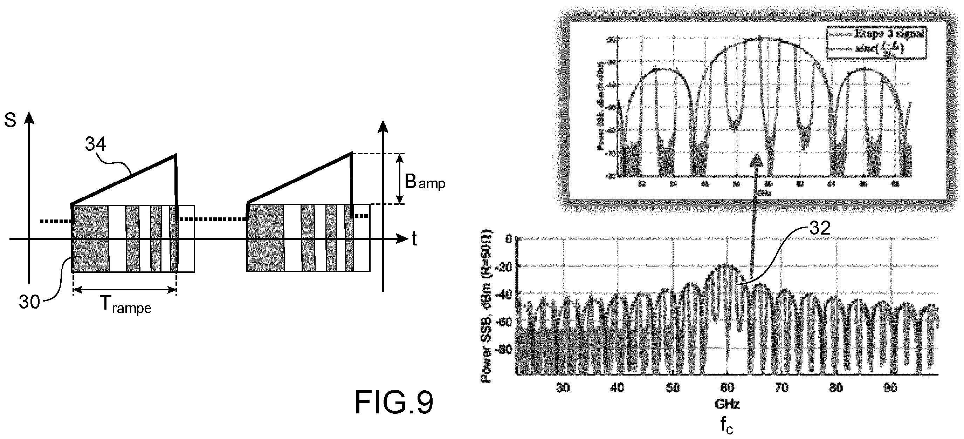

La figure 9 représente schématiquement le troisième signal s(t) dans le domaine temporel (désigné par la référence 30) et dans le domaine fréquentiel (spectre désigné par la référence 32), ainsi que l'évolution dans le domaine temporel de la fréquence de ce signal s(t) (désignée par la référence 34 et qui correspond à la rampe formée par la variation de la fréquence de ce signal dans le temps, cette rampe étant différente à celle des premier et deuxième signaux x(t) et y(t) du fait que la bande de fréquences parcourue par le troisième signal s(t) correspond à la deuxième bande de fréquences B$_{amp}$).

Du point de vue fréquentiel, le troisième signal s(t) a un maximum de puissance à la fréquence f$_c$, et son enveloppe correspond au sinus cardinal $sinc\left(\frac{f-f_c}{2f_{in}}\right)$.

Le générateur 100 comporte également un oscillateur verrouillé par injection 110, ou ILO, recevant en entrée le troisième signal s(t). Cet ILO 110 filtre le troisième signal s(t) en supprimant les sous-bandes adjacentes à une bande d'intérêt k.B$_{in}$, avec k nombre entier supérieur à 1, et qui permet de produire en sortie le signal radar modulé en fréquence appelé z(t). Ce filtrage est obtenu du fait que l'ILO 110 se verrouille à la raie du signal s(t) la plus proche de sa fréquence d'oscillation libre. Le signal de contrôle appliqué sur l'entrée de commande de l'ILO 110 permet de positionner la fréquence d'oscillation libre de l'ILO 110 proche de k.f$_{in}$ afin de centrer le signal délivré par l'oscillateur 110 exactement sur k.f$_{in}$ lors du verrouillage de l'ILO 110 sur la fréquence k.f$_{in}$. En reprenant l'exemple de réalisation précédemment décrit, avec k = 27 et B$_{in}$ = 43,2 MHz, la bande k. B$_{in}$ obtenue est égale à 1,16 GHz.

Lorsque le générateur 100 comporte un tel ILO couplé à la sortie de l'oscillateur 108, la valeur de la fréquence f$_c$ de l'oscillateur 108 est choisie telle qu'elle soit proche de la valeur d'un multiple de la fréquence f$_{in}$ afin que le filtrage réalisé par l'ILO inclut la fréquence f$_c$ dans le lobe principal du gabarit de filtrage réalisé par l'ILO. Par exemple, lorsque f$_{in}$ = 2,16 GHz et qu'il est souhaité obtenir un signal dans la bande de fréquence correspondant à la 27$^{ème}$ harmonique de f$_{in}$, la tension de commande appliquée sur l'oscillateur 108 peut être telle que la valeur de la fréquence f$_c$ soit égale à 60 GHz, ce qui est tel que 27f$_{in}$ < f$_c$ < 28f$_{in}$.

Dans le premier mode de réalisation décrit ci-dessus, l'utilisation d'un oscillateur pour réaliser le dispositif 102 permet d'obtenir un démarrage rapide, et donc d'avoir une faible valeur de T$_{transitoire}$, par exemple inférieure à 10 ns. Du fait que la valeur de T$_{transitoire}$ est faible, ce premier mode de réalisation permet d'avoir une valeur importante pour le paramètre T$_{arrêt}$, et est donc bien adapté pour maximiser l'économie d'énergie réalisée par le générateur 100.

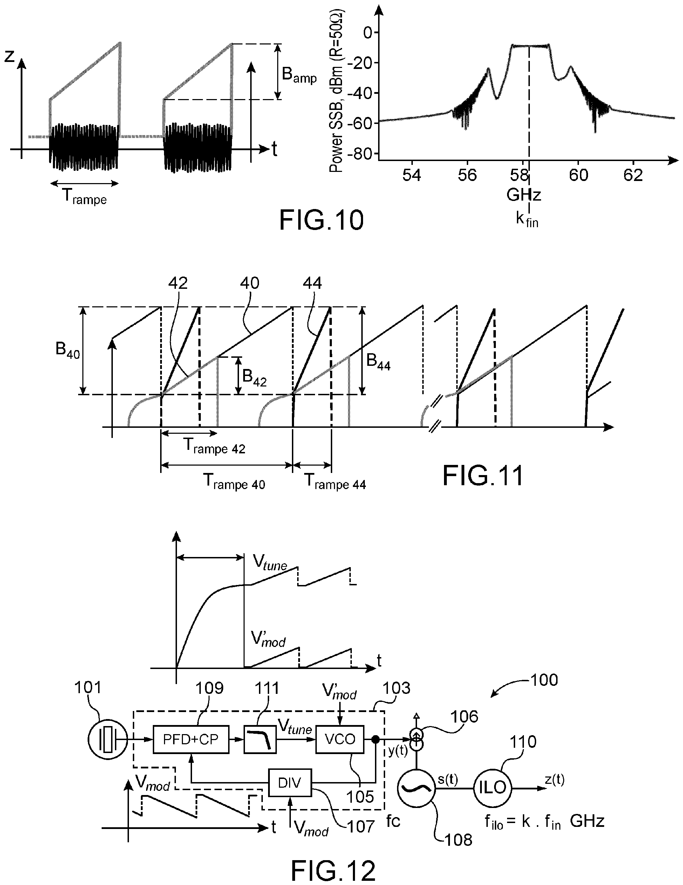

La figure 11 représente sur un même diagramme les évolutions dans le domaine temporel de la fréquence des signaux radar modulés en fréquence précédemment décrites sur les figures 1 et 2 (portant respectivement les références 40 et 42) ainsi que celle du signal radar modulé en fréquence obtenu en sortie du générateur 100 (référence 44). Le signal radar obtenu en sortie du générateur 100 permet de balayer une grande bande de fréquence (référencée B$_{44}$) en un temps très court (référencé T$_{rampe44}$), contrairement aux solutions de l'art antérieur. Ainsi, la rampe 42, correspondant à celle représentée sur la figure 1, a une bande de fréquences B$_{42}$ importante (ici similaire à la bande de fréquence B$_{44}$) mais elle nécessite, pour être parcourue par le signal radar, une durée T$_{rampe42}$ importante bien supérieure à la durée T$_{rampe44}$. De plus, la rampe 40, correspondant à celle représentée sur la figure 2, a une petite bande de fréquences B$_{40}$ (inférieure à la bande de fréquences B$_{44}$) qui peut être parcourue avec une faible durée T$_{rampe40}$ (mais qui est supérieure à T$_{rampe44}$).

Dans le premier mode de réalisation décrit ci-dessus, le deuxième signal y(t) est obtenu en générant tout d'abord le premier signal x(t), puis en transformant le premier signal x(t) pour obtenir le deuxième signal y(t). Selon un deuxième mode de réalisation, il est possible que le générateur 100 comporte un dispositif permettant de générer directement le deuxième signal y(t), sans générer au préalable le premier signal x(t).

La figure 12 représente un exemple de réalisation du générateur 100 selon le deuxième mode de réalisation.

Sur la figure 12, le générateur 100 comporte un résonateur 101 dont une sortie est couplée électriquement à une boucle à verrouillage de phase 103. Cette boucle 103 comporte un oscillateur 105 correspondant à un VCO. La boucle 103 comporte également un diviseur de fréquence 107 apte à diviser la fréquence du signal délivré par l'oscillateur 105 par un nombre dont la valeur est fonction de celle d'un signal de commande $V_{mod}$ appliqué en entrée du diviseur de fréquence 107. On obtient en sortie du diviseur de fréquence 107 un signal périodique qui est ensuite comparé à un signal périodique de référence très stable de fréquence fourni par le résonateur 101, par exemple à quartz. La boucle 103 comporte également un comparateur de phases et d'un circuit de pompe de charge (PFD+CP) 109 générant un signal de sortie proportionnel à la différence de phases entre le signal délivré par le résonateur 101 et celui obtenu en sortie du diviseur de fréquence 107. Un filtre 111 est interposé entre la sortie du circuit de pompe de charge et l'entrée de l'oscillateur 105. Dans cette boucle 103, la variation linéaire de la fréquence instantanée du signal délivré en sortie de la boucle 103 est obtenue en faisant varier le rapport de division appliqué par le diviseur de fréquence 107 grâce à la variation d'amplitude du signal de commande $V_{mod}$. Un autre signal de commande $V'_{mod}$ est appliqué sur l'entrée de commande de l'oscillateur 105 afin de stabiliser la réaction de la boucle 103 aux variations du rapport de division.

L'excursion de fréquence de la PLL peut être réduite d'un facteur important correspondant au facteur de multiplication k appliqué à la fréquence $f_{in}$. Par exemple, il est suffisant de réaliser un deuxième signal y(t) avec bande de fréquence $B_{in}$ égale à 43,2 MHz pour pouvoir générer à la sortie de l'ILO 110 un signal radar dont la bande de fréquences $B_{amp}$ est supérieure à 1 GHz pour des valeurs de $k \geq 27$. Dans ce cas, lorsque le paramètre $\alpha$ de la rampe formée par le deuxième signal y(t) est de 173 MHz/$\mu$s, celui de la rampe formée par le signal radar délivré en sortie de l'ILO 110 correspond à k.173 MHz/$\mu$s, soit 4,6 GHz/$\mu$s lorsque k = 27

Le signal périodique modulé en fréquence y(t) est ici obtenu en sortie de l'oscillateur 105 de la boucle à verrouillage de phase 103.

La boucle à verrouillage de phase 103 peut être réalisée comme décrit dans le document Cherniak, D. et al., «A 23-GHz Low-Phase-Noise Digital Bang-Bang PLL for Fast Triangular and Sawtooth Chirp Modulation », IEEE Journal of Solid-State Circuits, 2018, 53, (12), pp. 3565-3575.

Dans ce deuxième mode de réalisation, la durée $T_{transistoire}$ est plus longue que celle obtenue dans le premier mode de réalisation, et par exemple comprise entre 1 ms et 2 ms. Par contre, par rapport au premier mode de réalisation, la linéarité du générateur 100 est améliorée, ce qui permet maximise le SNR à la réception du signal radar généré.

Selon un troisième mode de réalisation du générateur 100, qui est une variante du 2ème mode de réalisation, la boucle à verrouillage de phase 103 est remplacée par un circuit de génération d'un signal modulé en fréquence réalisé comme décrit dans la demande de brevet FR 3 100 404 A1. Le signal délivré par le résonateur 101 est alors fourni à l'entrée « CLK_IN » d'un dispositif tel que décrit dans cette demande de brevet. Un avantage de ce circuit de génération d'un signal modulé en fréquence est qu'il permet de générer des rampes de fréquences beaucoup plus rapides (fréquence variant plus rapidement) et plus linéaires que les circuits à base de boucle à verrouillage de phase. En outre, le temps d'établissement du signal d'un tel circuit de génération est quasi-instantané contrairement aux boucles à verrouillage de phase qui ont toujours un temps d'établissement non négligeable.

Dans les deux modes de réalisation précédemment décrits, le signal s(t) est obtenu en sortie de l'oscillateur 108 grâce à la commande de l'alimentation électrique de l'oscillateur 108 par le deuxième signal y(t).

Dans les deux modes de réalisation précédemment décrits, le rapport cyclique $\alpha_{dc}$ du deuxième signal y(t) est constant. En variante, il est possible de faire varier la valeur de ce rapport cyclique périodiquement, par exemple à chaque période T. Les valeurs du rapport cyclique sont par exemple prédéfinies dans une mémoire, comme décrit par exemple dans le document de C. Jany, « Conception et étude d'une synthèse de fréquence innovante en technologies CMOS avancées pour les applications en bande de fréquence millimétrique », Thèse en sciences soutenue 2014, chapitre 4.

Dans les deux modes de réalisation précédemment décrits, le générateur 100 comporte l'ILO 110 permettant de réaliser un filtrage du signal s(t) délivré par l'oscillateur 108 afin que le signal radar généré ne comporte pas ou peu de composantes dans les bandes de fréquences autres que celle dans laquelle la rampe varie. En variante, il est toutefois possible que le générateur 100 ne comporte pas cet ILO 110. Dans ce cas, il est possible de choisir la valeur du rapport cyclique $\alpha_{dc}$ du deuxième signal y(t) comme étant proche de 1 du fait qu'à cette valeur, le spectre du deuxième signal y(t) forme des bandes secondaires beaucoup plus atténuée que la bande principale de ce spectre (voir le spectre représenté sur la figure 8 qui correspond au cas où le rapport cyclique $\alpha_{dc}$ du deuxième signal y(t) est proche de 1). Cette variante peut toutefois être appliquée même lorsque le rapport cyclique $\alpha_{dc}$ du deuxième signal y(t) n'est pas proche de 1. Dans ce cas, le signal radar généré par le générateur 100 comporte des variations de fréquences dans plusieurs bandes de fréquences différentes, ce qui peut être avantageux pour certains types de radar multibandes.

De manière générale, le générateur 100 permet d'obtenir les caractéristiques suivantes :

- Bande de fréquences $B_{amp}$ supérieure à 1 GHz et par exemple comprise entre 1 GHz et 3 GHz ;
- durée $T_{rampe}$ comprise entre 0,25 $\mu$s et 1 $\mu$s ;
- paramètre $\alpha$ de la pente en fréquence maximale supérieure à 4 GHz/$\mu$s ;

- durée $T_{transitoire}$ inférieure à 10 ns lorsque le générateur est réalisé selon le premier mode de réalisation.

Pour tous les modes de réalisation et les variantes, le générateur 100 peut être réalisé sous la forme d'une unique puce électronique, correspondant par exemple à un circuit intégré.

**Revendications**

1. Générateur (100) de signal radar modulé en fréquence, comprenant au moins :

   - un dispositif (101, 102, 103, 104) de génération d'un signal périodique modulé en fréquence sur au moins une partie $T_{rampe}$ d'une période T, correspondant, sur ladite au moins une partie $T_{rampe}$ de la période T, à un signal carré dont la fréquence varie linéairement dans une première bande de fréquences $B_{in}$ de fréquence centrale $f_{in}$ et dont l'amplitude alterne entre une première valeur et une deuxième valeur différente de la première valeur;
   - un oscillateur (108) comprenant une entrée d'alimentation électrique couplée à des moyens (106) aptes à être commandés par le signal périodique modulé en fréquence et à générer une tension d'alimentation de l'oscillateur (108) non nulle seulement lorsque l'amplitude du signal périodique modulé en fréquence est égale à la première valeur ou seulement lorsque l'amplitude du signal périodique modulé en fréquence est égale à la deuxième valeur, permettant à l'oscillateur (108) de générer un signal sinusoïdal de fréquence $f_c > f_{in}$ et comprise dans une deuxième bande de fréquences $B_{amp} > B_{in}$, la deuxième bande de fréquences $B_{amp}$ correspondant à la variation linéaire de la fréquence du signal radar modulé en fréquence destiné à être généré.

2. Générateur (100) de signal radar modulé en fréquence selon la revendication 1, dans lequel le dispositif de génération du signal périodique modulé en fréquence comporte :

   - un dispositif (102) de génération d'un premier signal périodique de période T correspondant, sur la partie $T_{rampe}$ de la période T, à un signal sinusoïdal dont la fréquence varie linéairement dans la première bande de fréquences $B_{in}$ ;
   - un dispositif (104) de conversion du premier signal périodique en le signal périodique modulé en fréquence tel que l'amplitude du signal périodique modulé en fréquence soit égale à la première valeur lorsque la valeur du premier signal périodique est strictement supérieure à 0 et soit égale à la deuxième valeur lorsque la valeur du premier signal périodique est strictement inférieure à 0.

3. Générateur (100) de signal radar modulé en fréquence selon la revendication 2, dans lequel le dispositif (102) de génération du premier signal périodique comporte un premier oscillateur commandé en tension.

4. Générateur (100) de signal radar modulé en fréquence selon l'une des revendications 2 ou 3, dans lequel le dispositif (104) de conversion du premier signal périodique comporte une boucle à verrouillage de fréquence incluant un oscillateur en anneau.

5. Générateur (100) de signal radar modulé en fréquence selon la revendication 1, dans lequel le dispositif de génération du signal périodique modulé en fréquence comporte au moins un dispositif résonateur (101) dont une sortie est couplée électriquement à une boucle à verrouillage de phase (103), le signal périodique modulé en fréquence étant destiné à être obtenu en sortie d'un deuxième oscillateur commandé en tension (105) de la boucle à verrouillage de phase (103).

6. Générateur (100) de signal radar modulé en fréquence selon l'une des revendications précédentes, dans lequel le signal périodique modulé en fréquence a une valeur nulle sur une deuxième partie de la période T différente de ladite au moins une partie $T_{rampe}$.

7. Générateur (100) de signal radar modulé en fréquence selon l'une des revendications précédentes, dans lequel la deuxième valeur du signal périodique modulé en fréquence est nulle.

8. Générateur (100) de signal radar modulé en fréquence selon l'une des revendications précédentes, dans lequel la valeur de la première bande de fréquences $B_{in}$ est comprise entre 1% et 2% de la fréquence central $f_{in}$.

9. Générateur (100) de signal radar modulé en fréquence selon l'une des revendications précédentes, dans lequel l'oscillateur (108) est commandé en tension et comporte une plage d'oscillation libre incluant la fréquence $f_c$ dont la valeur est fonction de celle d'une tension de commande destinée à être appliquée en entrée de cet oscillateur.

10. Générateur (100) de signal radar modulé en fréquence selon l'une des revendications précédentes, dans lequel les moyens (106) aptes à être commandés par le signal périodique modulé en fréquence comportent au moins un interrupteur couplé à l'entrée d'alimentation électrique de l'oscillateur (108) ou à la sortie de l'oscillateur (108).

11. Générateur (100) de signal radar modulé en fréquence selon l'une des revendications précédentes, comportant en outre au moins un oscillateur verrouillé par injection (110) destiné à recevoir en entrée un signal délivré sur la sortie de l'oscillateur (108) et à être verrouillé au moins périodiquement à une fréquence $f_{ILO} = k.f_{in}$, avec k nombre entier supérieur à 1, la valeur de $f_{ILO}$ étant, parmi les différentes valeurs multiples de celle de $f_{in}$, celle qui est la plus proche de la valeur de la fréquence $f_c$.

12. Générateur (100) de signal radar modulé en fréquence selon l'une des revendications précédentes, dans lequel les éléments du générateur sont réalisés sur une puce électronique.

**Patentansprüche**

1. Generator (100) für frequenzmodulierte Radarsignale, der mindestens umfasst:

- eine Vorrichtung (101, 102, 103, 104) zum Erzeugen eines auf mindestens einem Teil $T_{Rampe}$ einer Periode T frequenzmodulierten periodischen Signals, das auf dem mindestens einen Teil $T_{Rampe}$ der Periode T einem Rechtecksignal entspricht, dessen Frequenz in einem ersten Frequenzband $B_{in}$ der Mittenfrequenz $f_{in}$ linear variiert und dessen Amplitude zwischen einem ersten Wert und einem sich vom ersten Wert unterscheidenden zweiten Wert wechselt;
- einen Oszillator (108), der einen elektrischen Versorgungseingang umfasst, der mit Mitteln (106) gekoppelt ist, die geeignet sind, über das frequenzmodulierte periodische Signal gesteuert zu werden und eine Versorgungsspannung von ungleich Null für den Oszillator (108) nur dann zu erzeugen, wenn die Amplitude des frequenzmodulierten periodischen Signals gleich dem ersten Wert ist, oder nur dann, wenn die Amplitude des frequenzmodulierten periodischen Signals gleich dem zweiten Wert ist, was es dem Oszillator (108) ermöglicht, ein sinusförmiges Signal der Frequenz $f_c > f_{in}$ zu erzeugen, das in einem zweiten Frequenzband $B_{amp} > B_{in}$ umfasst ist, wobei das zweite Frequenzband $B_{amp}$ der linearen Variation der Frequenz des frequenzmodulierten Radarsignals, das erzeugt werden soll, entspricht.

2. Generator (100) für frequenzmodulierte Radarsignale nach Anspruch 1, wobei die Vorrichtung zum Erzeugen des frequenzmodulierten periodischen Signals umfasst:

- eine Vorrichtung (102) zum Erzeugen eines ersten periodischen Signals der Periode T, das auf dem Teil $T_{Rampe}$ der Periode T einem sinusförmigen Signal entspricht, dessen Frequenz im ersten Frequenzband $B_{in}$ linear variiert;
- eine Vorrichtung (104) zum Umwandeln des ersten periodischen Signals in das frequenzmodulierte periodische Signal derart, dass die Amplitude des frequenzmodulierten periodischen Signals gleich dem ersten Wert ist, wenn der Wert des ersten periodischen Signals strikt größer als 0 ist, und gleich dem zweiten Wert ist, wenn der Wert des ersten periodischen Signals strikt kleiner als 0 ist.

3. Generator (100) für frequenzmodulierte Radarsignale nach Anspruch 2, wobei die Vorrichtung (102) zum Erzeugen des ersten periodischen Signals einen ersten spannungsgesteuerten Oszillator umfasst.

4. Generator (100) für frequenzmodulierte Radarsignale nach einem der Ansprüche 2 oder 3, wobei die Vorrichtung (104) zum Umwandeln des ersten periodischen Signals eine Frequenzregelschleife umfasst, die einen Ringoszillator beinhaltet.

5. Generator (100) für frequenzmodulierte Radarsignale nach Anspruch 1, wobei die Vorrichtung zum Erzeugen des frequenzmodulierten periodischen Signals mindestens eine Resonatorvorrichtung (101) umfasst, von der ein Ausgang elektrisch mit einer Phasenregelschleife (103) gekoppelt ist, wobei das frequenzmodulierte periodische Signal dazu bestimmt ist, am Ausgang eines zweiten spannungsgesteuerten Oszillators (105) der Phasenregelschleife (103) erhalten zu werden.

**6.** Generator (100) für frequenzmodulierte Radarsignale nach einem der vorstehenden Ansprüche, wobei das frequenzmodulierte periodische Signal auf einem sich von dem mindestens einen Teil $T_{Rampe}$ unterscheidendenzweiten Teil der Periode T einen Wert von Null aufweist.

**7.** Generator (100) für frequenzmodulierte Radarsignale nach einem der vorstehenden Ansprüche, wobei der zweite Wert des frequenzmodulierten periodischen Signals Null ist.

**8.** Generator (100) für frequenzmodulierte Radarsignale nach einem der vorstehenden Ansprüche, wobei der Wert des ersten Frequenzbandes $B_{in}$ im Bereich zwischen 1 % und 2 % der Mittenfrequenz $f_{in}$ liegt.

**9.** Generator (100) für frequenzmodulierte Radarsignale nach einem der vorstehenden Ansprüche, wobei der Oszillator (108) spannungsgesteuert ist und einen freien Schwingungsbereich umfasst, der die Frequenz $f_c$ beinhaltet, deren Wert von dem einer Steuerspannung abhängt, die dazu bestimmt ist, an den Eingang dieses Oszillators angelegt zu werden.

**10.** Generator (100) für frequenzmodulierte Radarsignale nach einem der vorstehenden Ansprüche, wobei die Mittel (106), die geeignet sind, über das frequenzmodulierte periodische Signal gesteuert zu werden, mindestens einen Schalter umfassen, der mit dem elektrischen Versorgungseingang des Oszillators (108) oder mit dem Ausgang des Oszillators (108) gekoppelt ist.

**11.** Generator (100) für frequenzmodulierte Radarsignale nach einem der vorstehenden Ansprüche, der weiter mindestens einen injektionsgeregelten Oszillator (110) umfasst, der dazu bestimmt ist, am Eingang ein Signal zu empfangen, das über den Ausgang des Oszillators (108) geliefert wird, und mindestens periodisch auf eine Frequenz $f_{ILO} = k.f_{in}$ geregelt zu werden, wobei k eine ganze Zahl größer als 1 ist, wobei der Wert von $f_{ILO}$ unter den verschiedenen vielfachen Werten desjenigen von $f_{in}$ derjenige ist, der am nächsten am Wert der Frequenz $f_c$ liegt.

**12.** Generator (100) für frequenzmodulierte Radarsignale nach einem der vorstehenden Ansprüche, wobei die Elemente des Generators auf einem elektronischen Chip ausgeführt sind.

**Claims**

**1.** A frequency-modulated radar signal generator (100), comprising at least:

- a device (101, 102, 103, 104) for generating a periodic frequency-modulated signal over at least part $T_{ramp}$ of a period T, corresponding, on said at least part $T_{ramp}$ of the period T, to a square signal the frequency of which varies linearly in a first frequency band $B_{in}$ of central frequency $f_{in}$ and the amplitude of which alternates between a first value and a second value different from the first value;
- an oscillator (108) comprising an electrical power supply input coupled to means (106) capable of being controlled by the periodic frequency-modulated signal and of generating a non-zero supply voltage of the oscillator (108) only when the amplitude of the periodic frequency-modulated signal is equal to the first value or only when the amplitude of the periodic frequency-modulated signal is equal to the second value, allowing the oscillator (108) to generate a sinusoidal signal of frequency $f_c > f_{in}$ and comprised in a second frequency band $B_{amp} > B_{in}$, the second frequency band $B_{amp}$ corresponding to the linear variation of the frequency of the frequency-modulated radar signal intended to be generated.

**2.** The frequency-modulated radar signal generator (100) according to claim 1, wherein the device for generating the periodic frequency-modulated signal includes:

- a device (102) for generating a first periodic signal of period T corresponding, on the part $T_{ramp}$ of the period T, to a sinusoidal signal whose frequency varies linearly in the first frequency band $B_{in}$;
- a device (104) for converting the first periodic signal into the periodic frequency-modulated signal such that the amplitude of the periodic frequency-modulated signal is equal to the first value when the value of the first periodic signal is strictly greater than 0 and equal to the second value when the value of the first periodic signal is strictly less than 0.

**3.** The frequency-modulated radar signal generator (100) according to claim 2, wherein the device (102) for generating the first periodic signal includes a first voltage controlled oscillator.

4.  The frequency-modulated radar signal generator (100) according to one of claims 2 or 3, wherein the device (104) for converting the first periodic signal includes a frequency-locked loop including a ring oscillator.

5.  The frequency-modulated radar signal generator (100) according to claim 1, wherein the device for generating the periodic frequency-modulated signal includes at least one resonator device (101) the output of which is electrically coupled to a phase-locked loop (103), the periodic frequency-modulated signal being intended to be obtained at the output of a second voltage-controlled oscillator (105) of the phase-locked loop (103).

6.  The frequency-modulated radar signal generator (100) according to one of the preceding claims, wherein the periodic frequency-modulated signal has a zero value over a second part of the period T different from said at least part $T_{ramp}$.

7.  The frequency-modulated radar signal generator (100) according to one of the preceding claims, wherein the second value of the periodic frequency-modulated signal is zero.

8.  The frequency-modulated radar signal generator (100) according to one of the preceding claims, wherein the value of the first frequency band $B_{in}$ is comprised between 1% and 2% of the central frequency $f_{in}$.

9.  The frequency-modulated radar signal generator (100) according to one of the preceding claims, wherein the oscillator (108) is voltage controlled and includes a free oscillation range including the frequency $f_c$ the value of which is a function of that of a control voltage intended to be applied at the input of this oscillator.

10. The frequency-modulated radar signal generator (100) according to one of the preceding claims, wherein the means (106) capable of being controlled by the periodic frequency-modulated signal include at least one switch coupled to the electrical power supply input of the oscillator (108) orto the output of the oscillator (108).

11. The frequency-modulated radar signal generator (100) according to one of the preceding claims, further including at least one injection-locked oscillator (110) intended to receive as input a signal delivered on the output of the oscillator (108) and to be locked at least periodically at a frequency $f_{ILO} = k.fin$, with k integer greater than 1, the value of $f_{ILO}$ being, among the different multiple values of that of $f_{in}$, the one which is closest to the value of the frequency $f_c$.

12. The frequency-modulated radar signal generator (100) according to one of the preceding claims, wherein the elements of the generator are produced on an electronic chip.

FIG.1

FIG.2

FIG.3

FIG.4

FIG.5

FIG.6

FIG.7

FIG.8

FIG.9

FIG.10

FIG.11

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3100404 A1

**Littérature non-brevet citée dans la description**

- **Y. LIU et al.** 9.3 A680 μW Burst-Chirp UWB Radar Transceiver for Vital Signs and Occupancy Sensing up to 15m Distance. *2019 IEEE International Solid-State Circuits Conférence - (ISSCC), San Francisco, CA, USA,* 2019, 166-168
- **A. BANERJEE et al.** Millimeter-Wave Transceivers for Wireless Communication, Radar, and Sensing : (Invited Paper). *2019 IEEE Custom Integrated Circuits Conférence (CICC), Austin, TX, USA,* 2019, 1-11
- A low power Pulse Frequency Modulated UWB radar transmitter concept based on switched injection locked harmonie sampling. **CHRISTIAN CARLOW-ITZ et al.** Microwave Conférence (GEMIC), 2012 the 7th German. IEEE, 12 Mars 2012, 1-4
- An Ultralow Power Burst-Chirp UWB Radar Transceiver for Indoor Vital Signs and Occupancy Sensing in 40-nm CMOS. **LIU YAO-HONG et al.** IEEE Solid-State Circuits Letters. IEEE, 01 Novembre 2019, vol. 2, 256-259
- **C.-H. YEN ; M. NASROLLAHPOUR.** Low-Power and High-Frequency Ring Oscillator Design in 65nm CMOS Technology. *2017 IEEE 12th International Conférence on ASIC (ASICON)*
- **CHERNIAK, D et al.** A 23-GHz Low-Phase-Noise Digital Bang-Bang PLL for Fast Triangular and Sawtooth Chirp Modulation. *IEEE Journal of Solid-State Circuits,* 2018, vol. 53 (12), 3565-3575
- **C. JANY.** Conception et étude d'une synthèse de fréquence innovante en technologies CMOS avancées pour les applications en bande de fréquence millimétrique. *Thèse en sciences soutenue 2014*